(19) Europäisches Patentamt
European Patent Office
Office européen des brevets

(11) **EP 4 270 844 A1**

(12) **EUROPEAN PATENT APPLICATION**

(43) Date of publication:
**01.11.2023 Bulletin 2023/44**

(21) Application number: **23167449.0**

(22) Date of filing: **11.04.2023**

(51) International Patent Classification (IPC):
***H04L 5/00*** *(2006.01)*

(52) Cooperative Patent Classification (CPC):
**H04L 5/0048; H04L 5/0094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 KR 20220052400**
**04.07.2022 KR 20220082026**

(71) Applicant: **LG Electronics Inc.**
**Yeongdeungpo-gu**
**Seoul, 07336 (KR)**

(72) Inventors:
- **KIM, Hyungtae**
  **06772 SEOUL (KR)**
- **KANG, Jiwon**
  **06772 SEOCHO-GU (KR)**

(74) Representative: **Plasseraud IP**
**66, rue de la Chaussée d'Antin**
**75440 Paris Cedex 09 (FR)**

(54) **METHOD AND APPARATUS FOR UPLINK TRANSMISSION IN WIRELESS COMMUNICATION SYSTEM**

(57)   A method and an apparatus for uplink transmission in a wireless communication system are disclosed. A method performed by a terminal in a wireless communication system according to an embodiment of the present disclosure may comprise: receiving information related to a first number of reference signals (RSs) for uplink transmission from a network; and performing the uplink transmission based on the second number of RSs among the first number of RSs. Here, the second number may be smaller than the first number, and the second number of RSs may be paired based on one or more of a type, an indication order, or an index related to a RS.

FIG.8

```
        START
          |
          v
+-----------------------------+
|  Receive information related to   |——— S810
|  the first number of RSs for UL transmission  |
+-----------------------------+
          |
          v
+-----------------------------+
|     Perform UL transmission      |——— S820
|  based on the second number of RSs  |
|   among the first number of RSs   |
+-----------------------------+
          |
          v
         END
```

EP 4 270 844 A1

**Description**

Technical Field

The present disclosure relates to a wireless communication system, and more particularly, to a method and apparatus for performing uplink transmission and reception in a wireless communication system.

BACKGROUND

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

SUMMARY

A technical object of the present disclosure is to provide a method and apparatus for performing uplink transmission in a wireless communication system.

An additional technical object of the present disclosure is to provide a method and an apparatus for performing a simultaneous uplink transmission related to multiple transmission element and/or multiple transmission target in a wireless communication system.

An additional technical object of the present disclosure is to provide a method and apparatus for performing uplink transmission by considering both a simultaneous uplink transmission scheme related to multiple transmission element and/or multiple transmission target and an uplink repetitive transmission scheme in a wireless communication system.

The technical objects to be achieved by the present disclosure are not limited to the above-described technical objects, and other technical objects which are not described herein will be clearly understood by those skilled in the pertinent art from the following description.

A method performed by a terminal in a wireless communication system according to an aspect of the present disclosure may comprise: receiving information related to a first number of reference signals (RSs) for uplink transmission from a network; and performing the uplink transmission based on the second number of RSs among the first number of RSs. Here, the second number may be smaller than the first number, and the second number of RSs may be paired based on one or more of a type, an indication order, or an index related to a RS.

A method performed by a base station in a wireless communication system according to an additional aspect of the present disclosure may comprise: transmitting information related to a first number of reference signals (RSs) for uplink reception to a terminal; and perform the uplink reception based on the second number of RSs among the first number of RSs. Here, the second number may be smaller than the first number, and the second number of RSs may be paired based on one or more of a type, an indication order, or an index related to a RS.

According to an embodiment of the present disclosure, a method and apparatus for performing uplink transmission in a wireless communication system may be provided.

According to an embodiment of the present disclosure, a method and an apparatus for performing a simultaneous uplink transmission related to multiple transmission element and/or multiple transmission target in a wireless communication system may be provided.

According to an embodiment of the present disclosure, a method and apparatus for performing uplink transmission by considering both a simultaneous uplink transmission scheme related to multiple transmission element and/or multiple transmission target and an uplink repetitive transmission scheme in a wireless communication system may be provided.

Effects achievable by the present disclosure are not limited to the above-described effects, and other effects which are not described herein may be clearly understood by those skilled in the pertinent art from the following description.

BRIEF DESCRIPTION OF THE DRAWINGS

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a flow chart for describing an example of a method for an uplink transmission by a terminal according to the present disclosure.
FIG. 9 is a diagram for describing an example of a method of receiving an uplink transmission be a base station according to the present disclosure.
FIG. 10 illustrates a block diagram of a wireless communication system according to an embodiment of the present disclosure.

DETAILED DESCRIPTION

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

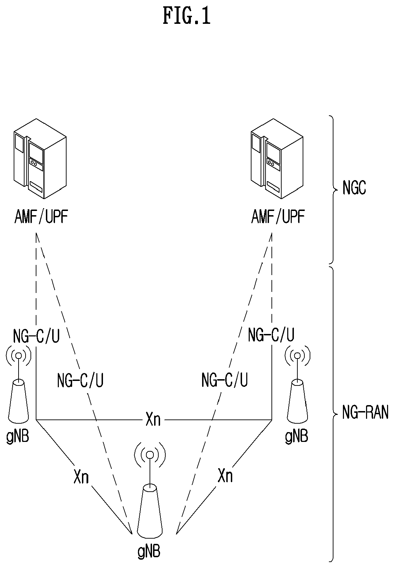

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

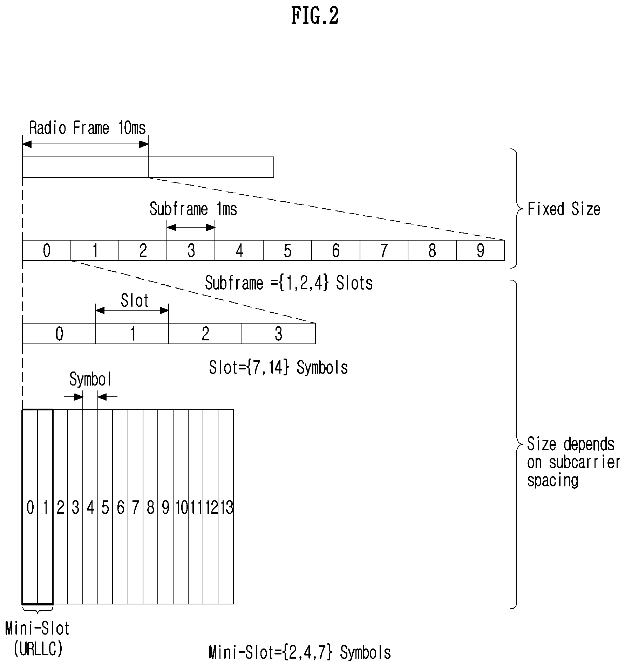

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot15$ [kHz] | CP |
|---|---|---|
| 0 | 15 | Normal |
| 1 | 30 | Normal |

(continued)

| μ | Δf=2^μ·15 [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slots}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

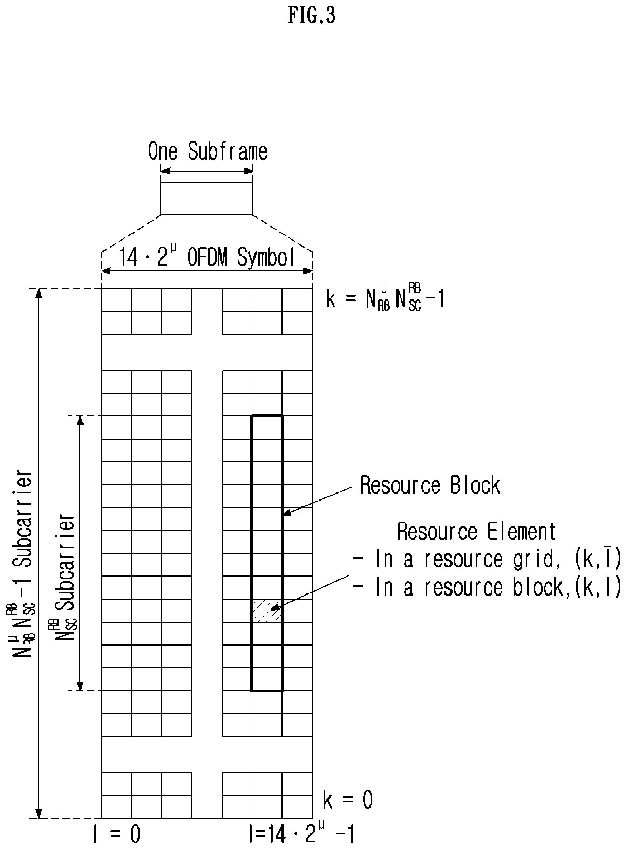

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l'=0,...,N_{symb}^{(\mu)}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

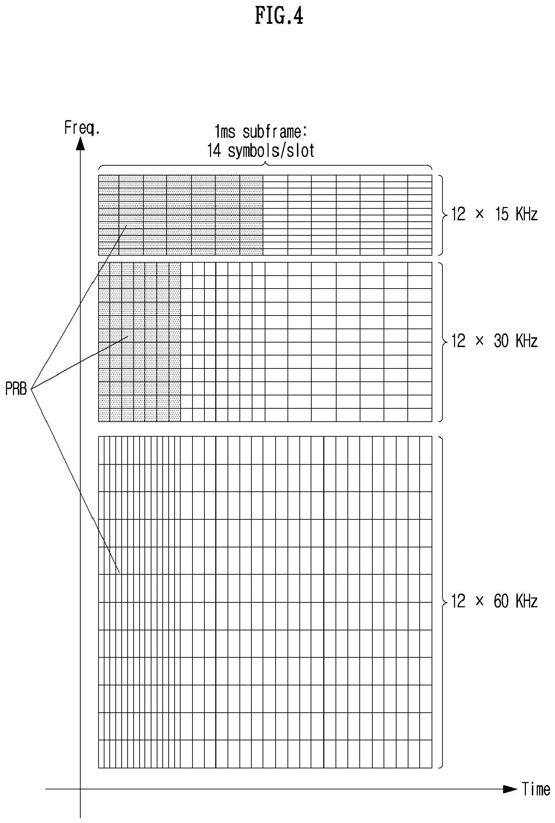

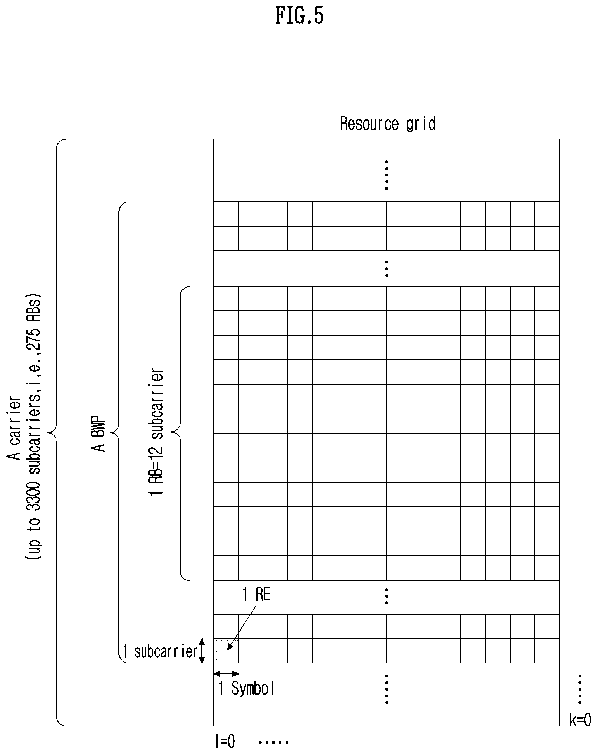

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

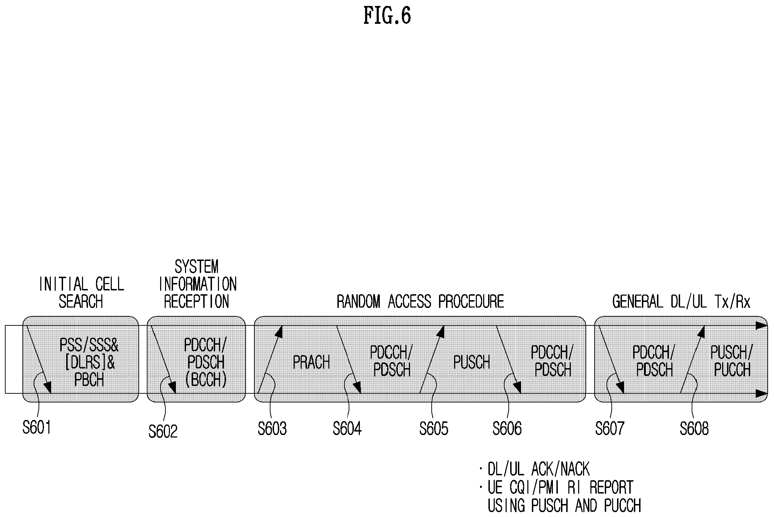

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme' is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

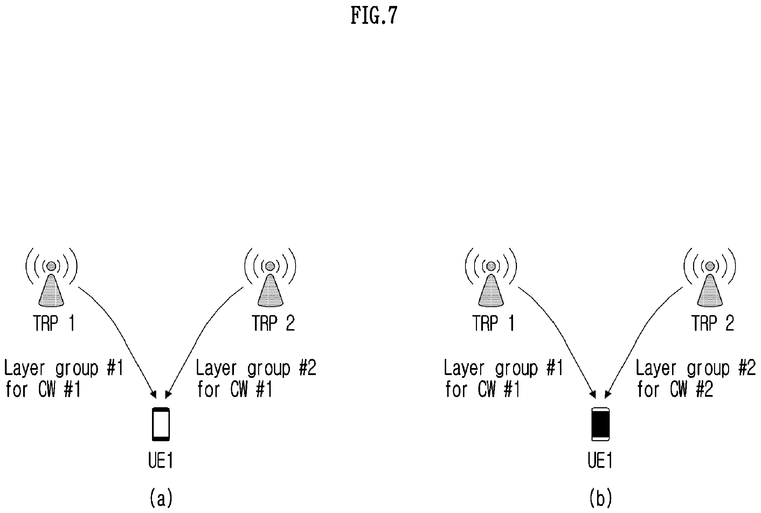

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following method is discussed.

1) Method 1 (SDM): Time and frequency resource allocation is overlapped and n (n<=Ns) TCI states in a single slot

1-a) Method 1a

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule.

### 1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

### 1-c) Method 1c

- At one transmission time (occasion), the same TB having one DMRS port associated with multiple TCI state indexes is transmitted in one layer or the same TB having multiple DMRS ports one-to-one associated with multiple TCI state indexes is transmitted in one layer.

In case of the method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

### 2-a) Method 2a

- A single codeword having one RV is used for all resource allocation. With regard to UE, common RB matching (mapping of a codeword to a layer) is applied to all resource allocation.

### 2-b) Method 2b

- A single codeword having one RV is used for each non-overlapping frequency resource allocation. A RV corresponding to each non-overlapping frequency resource allocation may be the same or different.

For the method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at every transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- Every transmission time (occasion) across K slots uses a common MCS with a single or multiple DMRS port(s).
- A RV/TCI may be the same or different at a different transmission time (occasion).

Hereinafter, MTRP URLLC is described.

In the present disclosure, DL MTRP URLLC means that multiple TRPs transmit the same data (e.g., the same TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is configured from a base station for which QCL RS/type (i.e., a DL TCI state) should be used in a layer/time/frequency resource receiving the same data/DCI. For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

And, in the present disclosure, UL MTRP-URLLC means that multiple TRPs receive the same data/UCI(uplink control information) from any UE by using a different layer/time/frequency resource. For example, TRP 1 receives the same data/DCI from UE in resource 1 and TRP 2 receives the same data/DCI from UE in resource 2 to share received data/DCI through a backhaul link connected between TRPs. UE configured with a UL MTRP-URLLC transmission method transmits the same data/UCI by using a different layer/time/frequency resource. In this case, UE is configured from a base station for which Tx beam and which Tx power (i.e., a UL TCI state) should be used in a layer/time/frequency resource transmitting the same data/DCI. For example, when the same data/UCI is transmitted in resource 1 and resource 2, a UL TCI state used in resource 1 and a UL TCI state used in resource 2 may be configured. Such UL MTRP URLLC may be applied to a PUSCH/a PUCCH.

In addition, in the present disclosure, when a specific TCI state (or TCI) is used (or mapped) in receiving data/DCI/UCI for any frequency/time/space resource (layer), it means as follows. For a DL, it may mean that a channel is estimated from a DMRS by using a QCL type and a QCL RS indicated by a corresponding TCI state in that frequency/time/space resource (layer) and data/DCI is received/demodulated based on an estimated channel. In addition, for a UL, it may mean that a DMRS and data/UCI are transmitted/modulated by using a Tx beam and power indicated by a corresponding TCI state in that frequency/time/space resource.

Here, an UL TCI state has Tx beam and/or Tx power information of UE and may configure spatial relation information, etc. to UE through other parameter, instead of a TCI state. An UL TCI state may be directly indicated by UL grant DCI or may mean spatial relation information of a SRS resource indicated by a SRI (sounding resource indicator) field of UL grant DCI. Alternatively, it may mean an open loop (OL) Tx power control parameter connected to a value indicated by a SRI field of UL grant DCI (e.g., j: an index for open loop parameter Po and alpha (up to 32 parameter value sets per cell), q_d: an index of a DL RS resource for PL (pathloss) measurement (up to 4 measurements per cell), l: a closed loop power control process index (up to 2 processes per cell)).

Hereinafter, MTRP eMBB is described.

In the present disclosure, MTRP-eMBB means that multiple TRPs transmit different data (e.g., a different TB) by using a different layer/time/frequency. UE configured with a MTRP-eMBB transmission method receives an indication on multiple TCI states through DCI and assumes that data received by using a QCL RS of each TCI state is different data.

On the other hand, UE may figure out whether of MTRP URLLC transmission/reception or MTRP eMBB transmission/reception by separately dividing a RNTI for MTRP-URLLC and a RNTI for MTRP-eMBB and using them. In other words, when CRC masking of DCI is performed by using a RNTI for URLLC, UE considers it as URLLC transmission and when CRC masking of DCI is performed by using a RNTI for eMBB, UE considers it as eMBB transmission. Alternatively, a base station may configure MTRP URLLC transmission/reception or TRP eMBB transmission/reception to UE through other new signaling.

In a description of the present disclosure, it is described by assuming cooperative transmission/reception between 2 TRPs for convenience of a description, but a method proposed in the present disclosure may be also extended and applied in 3 or more multiple TRP environments and in addition, it may be also extended and applied in multiple panel environments (i.e., by matching a TRP to a panel). In addition, a different TRP may be recognized as a different TCI state to UE. Accordingly, when UE receives/transmits data/DCI/UCI by using TCI state 1, it means that data/DCI/UCI is received/transmitted from/to a TRP 1.

Hereinafter, methods proposed in the present disclosure may be utilized in a situation that MTRPs cooperatively transmit a PDCCH (repetitively transmit or partitively transmit the same PDCCH). In addition, methods proposed in the present disclosure may be also utilized in a situation that MTRPs cooperatively transmit a PDSCH or cooperatively receive a PUSCH/a PUCCH.

In addition, in the present disclosure, when a plurality of base stations (i.e., MTRPs) repetitively transmit the same PDCCH, it may mean the same DCI is transmitted through multiple PDCCH candidates and it may also mean that a plurality of base stations repetitively transmit the same DCI. Here, the same DCI may mean two DCI with the same DCI format/size/payload. Alternatively, although two DCI has a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception occasion of DCI, so if DCI received at n occasions and DCI received at n+1 occasions inform UE of the same scheduling result, a TDRA field of two DCI is different and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of the other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure, when a plurality of base stations (i.e., MTRPs) partitively transmit the same PDCCH, it means that one DCI is transmitted through one PDCCH candidate, but TRP 1 transmits some resources that such a PDCCH candidate is defined and TRP 2 transmits the remaining resources. For example, when a PDCCH candidate corresponding to aggregation level m1+m2 is partitively transmitted by TRP 1 and TRP 2, a PDCCH candidate may be divided into PDCCH candidate 1 corresponding to aggregation level m1 and PDCCH candidate 2 corresponding to aggregation level m2, and TRP 1 may transmit PDCCH candidate 1 and TRP 2 may transmit PDCCH candidate 2 to a different time/frequency resource. After receiving PDCCH candidate 1 and PDCCH candidate 2, UE may generate a PDCCH candidate corresponding to aggregation level m1+m2 and try DCI decoding.

In addition, in the present disclosure, when UE repetitively transmits the same PUSCH so that a plurality of base stations (i.e., MTRPs) can receive it, it may mean that UE transmitted the same data through multiple PUSCHs. In this case, each PUSCH may be optimized and transmitted to an UL channel of a different TRP. For example, when UE repetitively transmits the same data through PUSCH 1 and 2, PUSCH 1 is transmitted by using UL TCI state 1 for TRP 1 and in this case, link adaptation such as a precoder/MCS, etc. may be also scheduled/applied to a value optimized for a channel of TRP 1. PUSCH 2 is transmitted by using UL TCI state 2 for TRP 2 and link adaptation such as a precoder/MCS, etc. may be also scheduled/applied to a value optimized for a channel of TRP 2. In this case, PUSCH 1 and 2 which are repetitively transmitted may be transmitted at a different time to be TDM, FDM or SDM.

In addition, in the present disclosure, when UE partitively transmits the same PUSCH so that a plurality of base stations (i.e., MTRPs) can receive it, it may mean that UE transmits one data through one PUSCH, but it divides resources allocated to that PUSCH, optimizes them for an UL channel of a different TRP and transmits them. For example, when UE transmits the same data through 10 symbol PUSCHs, data is transmitted by using UL TCI state 1 for TRP 1 in 5 previous symbols and in this case, link adaptation such as a precoder/MCS, etc. may be also scheduled/applied to a value optimized for a channel of TRP 1. The remaining data is transmitted by using UL TCI state 2 for TRP 2 in the remaining 5 symbols and in this case, link adaptation such as a precoder/MCS, etc. may be also scheduled/applied to a value optimized for a channel of TRP 2. In the example, transmission for TRP 1 and transmission for TRP 2 are TDM-ed by dividing one PUSCH into time resources, but it may be transmitted by a FDM/SDM method.

In addition, similarly to the above-described PUSCH transmission, also for a PUCCH, UE may repetitively transmit the same PUCCH or may partitively transmit the same PUCCH so that a plurality of base stations (i.e., MTRPs) receive it.

Hereinafter, a proposal of the present disclosure may be extended and applied to a variety of channels such as a PUSCH/a PUCCH/a PDSCH/a PDCCH, etc.

A proposal of the present disclosure may be extended and applied to both a case in which various uplink/downlink channels are repetitively transmitted to a different time/frequency/space resource and a case in which various uplink/downlink channels are partitively transmitted to a different time/frequency/space resource.

In the present disclosure, a transmission occasion (TO) may correspond to a resource unit in which a channel is transmitted/received or a candidate resource unit in which a channel may be transmitted/received. For example, when multiple channels are transmitted in the TDM scheme, TO may mean each channel that is or may be transmitted in different time resources. For example, when multiple channels are transmitted in the FDM scheme, TO may mean each channel that is or may be transmitted in different frequency resources (e.g., RBs). For example, when multiple channels are transmitted in the SDM scheme, TO may mean each channel that is or may be transmitted in different layers/beams/DMRS ports. One TCI state may be mapped to each TO. When the same channel is repeatedly transmitted, a complete DCI/dataIUCI may be transmitted in one TO, and the receiving end may receive multiple TOs to increase the reception success rate.

The above-described single DCI (S-DCI)-based multi-TB PUSCH/PDSCH scheduling scheme may be applied, for example, to a case that one DCI simultaneously schedules a plurality of PUSCH/PDSCHs in a very high frequency band (e.g., band above 5.26 GHz). For example, multiple time-domain resource allocations (TDRAs) (or TOs) may be indicated at once through a TDRA field of DCI for scheduling PUSCH, and different TBs may be transmitted through a PUSCH in each TO. Frequency domain resource allocation (FDRA), MCS, transmit precoding matrix indicator (TPMI), SRI values of Multi-TB PUSCH scheduling DCI may be commonly applied to a plurality of TBs scheduled by the corresponding DCI. In addition, NDI, RV may be individually/independently indicated for each TB through the multi-TB PUSCH scheduling DCI. In addition, in such multi-TB PUSCH scheduling DCI, one value is indicated for the HARQ (process) number (HPN), but values sequentially increasing in the TO order from the initial TO may be applied.

Additionally, a S-DCI based M-TRP PUSCH repetition transmission scheme may be considered. In this regard, the base station configures two SRS sets to the terminal for S-DCI-based M-TRP PUSCH transmission, and each set is used to indicate a UL Tx port for/to TRP 1 and TRP 2, and a UL beam /QCL information. In addition, the base station performs SRS resource indication for each SRS resource set and may indicate up to two PC parameter sets, through two SRI fields included in one DCI.

For example, the first SRI field may indicate the SRS resource and PC parameter set defined in SRS resource set 0, and the second SRI field may indicate the SRS resource and PC parameter set defined in SRS resource set 1. The terminal may receive an indication of the UL Tx port, PC parameter set, and UL beam/QCL information for TRP 1 through the first SRI field, and, through this, the terminal performs PUSCH transmission in TO corresponding to SRS resource set 0. Similarly, the terminal may receive an indication of the UL Tx port, PC parameter set, and UL beam/QCL information for TRP 2 through the second SRI field, and through this, the terminal may perform PUSCH transmission in TO corresponding to SRS resource set 1.

In addition to the above-described SRI field, an existing one field may be extended to two fields so that TPMI, PTRS, and TPC-related fields may be indicated for each TRP.

Additionally, an SRS resource set indication field (e.g., a 2-bit field) may be defined, and based on this, the terminal may perform the S-TRP PUSCH repetition transmission by selecting a specific one of the two SRS resource sets, or may perform M-TRP PUSCH repetition transmission by selecting both SRS resource sets.

For example, codepoint "00" of the SRS resource set indication field may indicate the first SRS resource set, and codepoint "01" may indicate the second SRS resource set/definition. When codepoint "00" or "01" is indicated, S-TRP PUSCH transmission corresponding to the SRS resource set indicated by each codepoint may be performed. In addition, codepoint "10" may be configured/defined to indicate [first SRS resource set, second SRS resource set], and codepoint "11" may be configured/defined to indicate [second SRS resource set, first SRS resource set]. When codepoint "10" or "11" is indicated, M-TRP PUSCH transmission may be performed in the order in which SRS resource set pairs are indicated. When codepoint "10" is indicated, the first SRS resource set corresponds to the first PUSCH TO, and when codepoint "11" is indicated, the second SRS resource set corresponds to the first PUSCH TO.

Additionally, a single PUCCH resource-based M-TRP repetition PUCCH transmission scheme may be considered. In this regard, for single PUCCH resource-based M-TRP PUCCH transmission, the base station may activate/configure two spatial relation info on a single PUCCH resource to the terminal (if FR1, two PC parameter sets may be activated/configured). When UL UCI is transmitted through a corresponding PUCCH resource, each spatial relation info is used to indicate spatial relation info toward TRP 1 and TRP 2 to the terminal, respectively. For example, through the value indicated in the first spatial relation info, the terminal is indicated with Tx beam/PC parameter(s) toward TRP 1, and the terminal performs PUCCH transmission in the TO corresponding to TRP 1 by using the corresponding information. Similarly, through the value indicated in the second spatial relation info, the terminal is indicated the Tx beam/PC parameter(s) toward TRP 2, and the terminal performs PUCCH transmission in the TO corresponding to TRP 2 by using the corresponding information.

In addition, for M-TRP PUCCH repetition transmission, a configuration method has been improved so that two spatial relation info may be configured in a PUCCH resource. That is, when power control (PC) parameters such as PLRS, Alpha, P0, and closed loop index are set/configured for each spatial relation info, spatial relation RS may be configured. As a result, PC information and spatial relation RS information corresponding to the two TRPs may be configured through the two spatial relation info. Through this, the terminal transmits the UCI (i.e., CSI, ACK/NACK, SR, etc.) PUCCH by using the first spatial relation info in the first TO, and transmits the same UCI PUCCH by using the second spatial relation info in the second TO. In the present disclosure, a PUCCH resource configured with two spatial relation info may be referred to as an M-TRP PUCCH resource, and a PUCCH resource configured with one spatial relation info may be referred to as an S-TRP PUCCH resource.

Method for repetition transmission and simultaneous transmission related to multiple transmission element/multiple transmission target

New methods in which a terminal simultaneously transmits several channels (CH)/reference signals (RSs) of the same type, the terminal simultaneously transmits several CHs/RSs of different types are being discussed. In the conventional scheme, the operation of the terminal transmitting a plurality of CHs/RSs in one time point (or in one time unit) is restricted. For example, for a terminal according to the conventional scheme, simultaneous transmission of a plurality of SRS resources belonging to different SRS resource sets is supported for uplink beam measurement, but simultaneous transmission of a plurality of different PUSCHs is not supported. Therefore, in order to support a more advanced terminal operation by alleviating the above restrictions, a method for simultaneously transmitting a plurality of CHs/RSs using a plurality of transmission elements of one terminal is being discussed.

For example, according to the present disclosure, a terminal may simultaneously perform uplink transmissions for multiple transmission targets using multiple transmission elements. In addition, the base station may simultaneously receive the uplink transmissions transmitted through the multiple transmission elements from the terminal in the multiple transmission targets. For example, a transmission element of the terminal may correspond to an antenna group or an antenna panel, and one antenna group/panel may correspond to one RS set (or one RS candidate set). That is, the antenna group/panel may be indicated/identified by the RS (candidate) set. For example, the transmission target of uplink transmission from the terminal may correspond to a TRP or a cell, and one TRP/cell may correspond to one CORESET group/pool. That is, the TRP/cell may be indicated/identified by the CORESET group/pool. For example, a simultaneous uplink transmission scheme for multiple transmission targets through multiple transmission elements may be referred to as simultaneous transmission across multi-panel (STxMP). However, the scope of the present disclosure is not limited by the name of the transmission scheme, the examples of the unit of the transmission element, and/or the examples of the unit of the transmission target.

As one example of STxMP operation, two PUSCHs corresponding to two UL TBs (e.g., a first PUSCH carrying a first TB, a second PUSCH carrying a second TB) may be scheduled on the same RB. In addition, an individual TCI state may be configured/indicated for each of a plurality of PUSCH transmissions. A plurality of TCI states may correspond to a plurality of transmission elements (e.g., a panel/RS set), respectively. In addition, one transmission element may correspond to one transmission target, respectively, and a plurality of transmission elements may correspond to one transmission target.

For example, a first spatial relation RS and a first power control (PC) parameter set (or a first UL TCI state) may be configured/indicated for a first PUSCH transmission, and a second spatial relation RS and a second PC parameter set (or a second UL TCI state) may be configured/indicated for a second PUSCH transmission. For example, the terminal may transmit a first PUSCH using a first panel corresponding to a first UL TCI state in a first time unit, and may transmit a second PUSCH using a second panel corresponding to a second UL TCI state in the first time unit. For example, the terminal may transmit (for the first CORESET pool) the first PUSCH through the first RS set based on the first UL TCI state in the first time unit, and may transmit the second PUSCH (for the second CORESET pool) through the second RS set based on the second UL TCI in the first time unit. A time unit may correspond to at least one of a symbol, a symbol group, a slot, or a slot group.

In this regard, when performing PUSCH scheduling through DCI, the base station may indicate whether to transmit the corresponding PUSCH through STxMP, single panel, or M-TRP repetition PUSCH. In this case, the terminal needs to have STxMP-related capabilities, and the STxMP mode needs to be enabled in advance through higher layer signaling (e.g., RRC signaling, etc.). For the indication, an existing SRS resource set indication field may be redefined and used, or a new DCI field may be introduced/defined.

Additionally, with respect to the proposal of the present disclosure, a unified TCI framework scheme may be considered. That is, the UL TCI state as well as the DL TCI state may be indicated together through the DL DCI (e.g., DCI format 1_1/1_2, etc.). Alternatively, only the UL TCI state may be indicated without indicating the DL TCI state through the DL DCI. Through this, schemes conventionally used for UL beam and power control (PC) configuration may be replaced through the above-described UL TCI state indication scheme.

As a specific example, one UL TCI state may be indicated through a TCI field in DL DCI. In this case, the UL TCI state may be applied to all PUSCH/PUCCHs after a certain time (e.g., beam application time), and may be applied to some or all of the indicated SRS resource sets. Alternatively, multiple UL TCI states (and/or DL TCI states) may be indicated through the TCI field in the DL DCI.

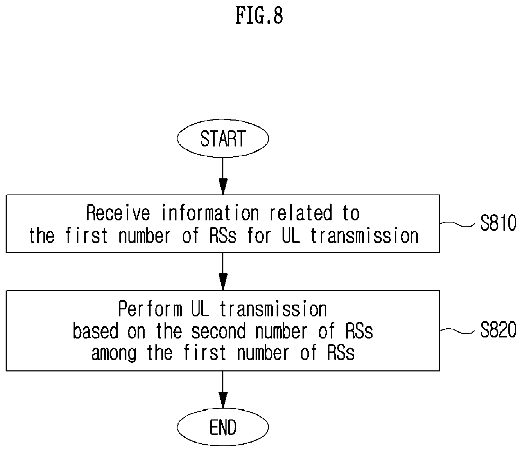

FIG. 8 is a diagram for explaining an example of an uplink transmission method of a terminal according to the present disclosure.

In step S810, the terminal may receive information related to a first number of reference signals (RSs) for uplink transmission from a base station.

In step S820, the terminal may perform the uplink transmission based on the second number of RSs among the first number of RSs.

In this case, the second number may be smaller than the first number. For the first number of RSs, the second number of RSs may be paired based on one or more of a type, an indication order, or an index related to a RS. That is, the first number of RSs may be configured/agreed into pairs corresponding to the second number of RSs according to a predetermined criterion.

For example, the type may include a first type for a RS related to an uplink transmission configuration indicator (TCI) state and a second type for a RS related to spatial relation info. In this regard, the second number of RSs may be paired by prioritizing the first type over the second type.

For example, the first number of RSs may include a plurality of RSs corresponding to the same type. In this regard, the second number of RSs may be paired according to an order in which the plurality of RSs corresponding to the same type are indicated. Additionally or alternatively, the second number of RSs may be sequentially paired based on the RS corresponding to the lowest index among the plurality of RSs corresponding to the same type.

For example, the second number of RSs may be simultaneously applied for the uplink transmission in one time unit (e.g., STxMP based transmission). In this regard, capability information related to simultaneous application of the second number of RSs may be reported from the terminal to the base station. When the corresponding operation is applied, the terminal needs to be in a status in which simultaneous application of the second number of RSs is enabled by the base station.

For example, when a plurality of time units for the uplink transmission is allocated to the terminal (e.g., multiple TO allocation according to UL M-TRP repetition), the uplink transmission may be performed according to an indication of a mapping relation between the second number of RSs and time units, over the plurality of time units. In this regard, the mapping relation may correspond to cyclic mapping or sequential mapping.

For example, capability information related to the number of RS candidate sets (e.g., antenna panel, STxMP panel, etc.) supportable by the terminal may be reported from the terminal to the base station, and the second number may be based on (e.g., equal to) the number of RS candidate sets.

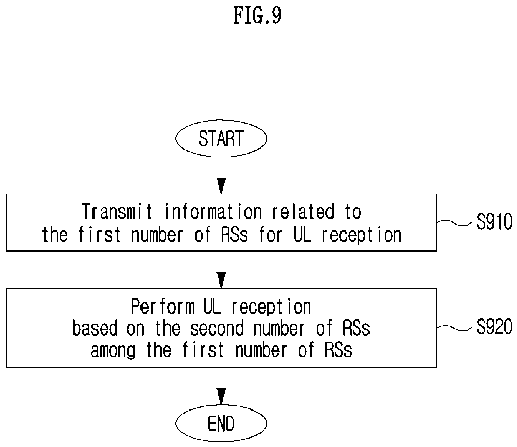

FIG. 9 is a diagram for explaining an example of an uplink reception method of a base station according to the present disclosure.

In step S910, the base station may transmit information related to a first number of reference signals (RSs) for uplink transmission to a terminal.

In step S920, the base station may perform the uplink reception based on the second number of RSs among the first number of RSs.

In this case, the second number may be smaller than the first number. For the first number of RSs, the second number of RSs may be paired based on one or more of a type, an indication order, or an index related to a RS. That is, the first number of RSs may be configured/agreed into pairs corresponding to the second number of RSs according to a predetermined criterion.

For example, the type may include a first type for a RS related to an uplink transmission configuration indicator (TCI) state and a second type for a RS related to spatial relation info. In this regard, the second number of RSs may be paired by prioritizing the first type over the second type.

For example, the first number of RSs may include a plurality of RSs corresponding to the same type. In this regard, the second number of RSs may be paired according to an order in which the plurality of RSs corresponding to the same type are indicated. Additionally or alternatively, the second number of RSs may be sequentially paired based on the RS corresponding to the lowest index among the plurality of RSs corresponding to the same type.

For example, the second number of RSs may be simultaneously applied for the uplink transmission in one time unit (e.g., STxMP based transmission). In this regard, capability information related to simultaneous application of the second number of RSs may be reported from the terminal to the base station. When the corresponding operation is applied, the terminal needs to be in a status in which simultaneous application of the second number of RSs is enabled by the base station.

For example, when a plurality of time units for the uplink transmission is allocated to the terminal (e.g., multiple TO allocation according to UL M-TRP repetition), the uplink transmission may be performed according to an indication of a mapping relation between the second number of RSs and time units, over the plurality of time units. In this regard, the mapping relation may correspond to cyclic mapping or sequential mapping.

For example, capability information related to the number of RS candidate sets (e.g., antenna panel, STxMP panel, etc.) supportable by the terminal may be reported from the terminal to the base station, and the second number may be based on (e.g., equal to) the number of RS candidate sets.

In the examples of FIG. 8 and FIG. 9, for each of a plurality of transmission elements (e.g., a plurality of antenna panels, a plurality of RS sets, a plurality of RS candidate sets, etc.), the related capability information related may be reported (in advance) from the terminal to the network. The base station may refer to the capability information of the terminal, and may configure/indicate to the terminal a transmission parameter related to a transmission target (e.g., CORESET pool, CORESET group, TRP) and/or a transmission element (e.g., antenna panel, RS set, RS candidate set, etc.).

Hereinafter, in the present disclosure, a detailed method of applying both STxMP and M-TRP repetitions by utilizing an RS set (or RS candidate set) configured for a terminal will be described. In this regard, the RS (candidate) may include one or more of an RS related to a UL TCI state or an RS related to spatial relation info.

As described above, multiple (i.e., two or more) UL TCI states may be configured/indicated by the unified TCI framework, that is, the unified TCI indication scheme, and two spatial relation info/RS and PC sets may be configured for PUSCH/PUCCH by the existing UL M-TRP transmission method. Accordingly, in the present disclosure, a method for applying STxMP and M-TRP repetition together by using both the UL TCI state configured/indicated for the unified TCI indication scheme and the spatial relation info/RS and PC set configured for the existing UL M-TRP transmission method will be proposed.

In the present disclosure, a case in which two UL TCI states are configured/indicated by a unified TCI indication scheme and two spatial relation info/RS and PC sets are configured by an existing UL M-TRP transmission method is described as an example, the scope of the present disclosure is not limited to the example. That is, the proposal of the present disclosure may be extended and applied even when more than two UL TCI states are configured/indicated by the unified TCI indication scheme, and when multiple UL TCI states are configured/indicated only by the unified TCI indication scheme.

For clarity of description below, two UL TCI states configured/indicated by the unified TCI indication scheme are referred to as [first TCI state, second TCI state], and two spatial relation info/RSs and PC sets configured by the existing UL M-TRP transmission scheme are referred to as [first beam, second beam]. In addition, although a panel is assumed and described as a representative example of a transmission element of a terminal, the scope of the present disclosure is not limited to the example.

The embodiments described below are differentiated for clarity of explanation, and each embodiment may be applied independently, or a part/all configuration of one embodiment may be applied in combination/combination/replacement with some entire configurations of another embodiment.

Embodiment 1

A terminal in which STxMP-based transmission is enabled needs to determine which pair to apply to STxMP among the configured/instructed first TCI state, second TCI state, first beam, and second beam.

In this regard, it may be promised/agreed/prescribed that the first TCI state and the second TCI state become one pair, and the first beam and the second beam become another pair. Alternatively, the base station may determine and indicate the terminal how to pair the first TCI state, the second TCI state, and the first beam and the second beam.

In this case, for each of a plurality of transmission occasions (TOs) allocated for M-TRP repetition, the terminal may perform STxMP-based transmission using the first TCI state and the second TCI state, or may perform STxMP-based transmission using the first beam and the second beam.

Additionally, it is necessary to determine how the above two pairs are mapped to each TO. In this regard, pair to TO mapping may be performed according to a cyclig mapping and/or a sequential mapping scheme. At this time, the base station may indicate the terminal with information for the corresponding mapping scheme.

Tables 5 and 6 illustrate TCI state/beam mapping when the terminal performs STxMP through the first panel and the second panel and performs M-TRP repetition through four TOs.

Tables 5 and 6 are described assuming that the first TCI state and the second TCI state are configured to one STxMP pair, the first beam and the second beam are configured to another STxMP pair, and pair to TO mapping is configured to sequential mapping.

[Table 5]

|  | First TO | Second TO | Third TO | Fourth TO |
|---|---|---|---|---|
| First panel | First PUSCH with first TCI state | First PUSCH with first TCI state | First PUSCH with first beam | First PUSCH with first beam |
| Second panel | First PUSCH with second TCI state | First PUSCH with second TCI state | First PUSCH with second beam | First PUSCH with second beam |

Referring to FIG. 5, as the STxMP pair is fixed, beam diversity that may be obtained in one TO may be limited.

In order to improve the point that beam diversity is limited, a method of rotating STxMP pairs as shown in Table 6 may be considered.

[Table 6]

|  | First TO | Second TO | Third TO | Fourth TO |
|---|---|---|---|---|
| First panel | First PUSCH with first TCI state | First PUSCH with first TCI state | First PUSCH with first beam | First PUSCH with first beam |
| Second panel | First PUSCH with second TCI state | First PUSCH with second beam | First PUSCH with second TCI state | First PUSCH with second beam |

Referring to FIG. 6, for each of the first TO, the second TO, the third TO, and the fourth TO, the STxMP pair may be xonfigured as [first TCI state, second TCI state], [first TCI state, second beam], [first beam, second TCI state], and [first beam, second beam]. That is, various STxMP pairs may be used by combining the indicated first TCI state or first beam and the indicated second TCI state or second beam.

Additionally or alternatively, a case where all four beams are indicated in the form of a TCI state may also be considered.

That is, the above method has been described on the assumption that two of the four beams are indicated through the TCI state and the remaining two beams are indicated through the spatial relation info, but even when all four beams are indicated through the TCI state, the above method may be extended and applied by replacing the above-described first and second beams with the third TCI state and the fourth TCI state. Additionally, although four beams have been described as an example for clarity of description, the scope of the present disclosure is not limited to the example, and may be extended and applied to a general plurality of beams.

For example, a terminal in which STxMP-based transmission is enabled may use at least one of the following methods (hereinafter, methods 1 to 3), in order for the terminal to determine which pair(s) is/are to be applied simultaneously among a first TCI state, a second TCI state, a third TCI state (e.g., corresponding to the above-described first beam) and a fourth TCI state (e.g., corresponding to the above-described first beams).

(Method 1) A method of forming a pair by selecting two of the four TCI states in the indicated order may be used.

For example, it is possible to configure/promise/agree the first TCI state and the second TCI state as one pair and the third TCI state and the fourth TCI state as another pair. If an odd number of TCI states are configured/indicated, the second pair may consist only of the third TCI state.

(Method 2) A method of forming a pair by selecting two of the four TCI states in order of low TCI state IDs (i.e., the TCI state set to the lowest ID corresponds to the first order) may be used.

For example, when four TCI states corresponding to TCI state IDs [0, 1, 2, 3] are indicated, two TCI states corresponding to TCI state IDs [0, 1] may be configured/promised/agreed as one pair, and two TCI states corresponding to TCI states [2, 3] may be configured/promised/agreed as another pair. If an odd number of TCI states are set/indicated, the last pair may consist of only one TCI state.

(Method 3) Four TCI states may be divided into two groups. The i-th TCI state of the first group may be configured/promised/agreed in a pair with ((i+j)% (the number of TCI states in the second group))+1-th TCI state of the second group. Here, "%" may mean a modulo operator that obtains a remainder value. In this case, information on j may be configured/indicated to the terminal by the base station.

The following methods may be used for grouping of TCI states.

First, the number of TCI states corresponding to half of the indicated number of TCI states may be selected in the indicated order and configured as one group, and the remainder may be configured as another group. In this case, when half of the indicated number of TCI states is not an integer, it may be made into an integer through rounding down/rounding up/rounding. For example, when four TCI states are indicated, the first TCI state and the second TCI state are grouped into one group (e.g., the first group) in the indicated order, the third TCI state and the fourth TCI state may be grouped into another group (e.g., a second group).

Alternatively, the number of TCI states corresponding to half of the indicated number of TCI states may be selected in order of low TCI state IDs (e.g., indexes) to configure/form one group, and the remainder may be configured as another group. At this time, when half of the indicated number of TCI states is not an integer, it may be made into an integer through rounding down/rounding up/rounding.

Alternatively, the base station may configure/set a group to the terminal. For example, if a panel ID is configured/set for each TCI state, a TCI state corresponding to panel ID = 1 may be grouped into a first group, and a TCI state corresponding to panel ID = 2 may be grouped into a second group.

In the above description, the four TCI states may be beam/power control (PC) related information corresponding to four different transmission targets (e.g., TRP, cell, base station Rx panel, etc.).

For example, the first TCI state, the second TCI state, the third TCI state, and the fourth TCI state correspond to the first TRP, the second TRP, the third TRP, and the fourth TRP, respectively, and the first UE Tx panel may be suitable for channel directions of the first TRP and the third TRP, and the second UE Tx panel may be suitable for the channel directions of the second TRP and the third TRP. In one TO, the terminal may transmit an uplink channel/RS toward the first TRP and the second TRP in the STxMP scheme, respectively, using the first UE Tx panel and the second UE Tx panel. In addition, in another TO, the terminal may transmit an uplink channel/RS toward the third TRP and the fourth TRP in the STxMP scheme, respectively, using the first UE Tx panel and the second UE Tx panel.

Embodiment 2

For M-TRP repetition, the base station may indicate the repetition number (R) to the terminal. Accordingly, the terminal is allocated R number of UL TOs, and the same PUSCH/PUCCH may be repeatedly transmitted R times through the corresponding TOs.

When the above-described STxMP-based transmission and M-TRP repetition are applied together, ambiguity may occur in the interpretation of R.

For example, when PUSCHs simultaneously transmitted in each of the first panel and the second panel correspond to the same TB, it may be interpreted that repetition transmission is already performed twice in one TO. Therefore, in this case, R is not equal to the number of TOs, and the number of TOs needs to be set to R/2 (at this time, if R/2 is not an integer, operations such as rounding/rounding down may be required). Alternatively, in this case, R is still assumed to be equal to the number of TOs, and the actual repetition number may be interpreted as 2*R. On the other hand, when PUSCHs simultaneously transmitted in each of the first panel and the second panel correspond to different TBs, R may be equal to the number of TOs.

In this regard, whether PUSCHs simultaneously transmitted in each of the first panel and the second panel are the same TB may be directly indicated or implicitly determined by the base station. For example, it is possible to promise/agree to transmit the same TB when the number of rank values is equal to or smaller than r, and transmit different TBs otherwise. If the rank value is greater than r, two codewords may be transmitted by codeword to layer mapping, and in this case, since each codeword corresponds to a different TB, different TBs may be transmitted.

Embodiment 3

One UL TCI state (e.g., first TCI state) is configured by an unified TCI indication scheme, and one spatial relation info/RS and PC set for UL transmission by an existing method (e.g., first beam) is configured, the terminal may perform STxMP-based transmission or M-TRP repetition transmission using both the first TCI state and the first beam.

That is, the STxMP-enabled terminal simultaneously performs UL transmission to which the first TCI state is applied and UL transmission to which the first beam is applied through two panels, and the terminal configured for M-TRP repetition may perform repetition transmission by cyclically/sequentially mapping the first TCI state and the first beam in multiple TOs.

The first TCI state has properties applied to all channels/RSs or some group channels/RSs, but spatial relation info/RS and PC set-based beam configuration has properties applied to specific channels/RSs. Therefore, when the above-described proposed method is applied, one beam direction may have a property common to a channel/RS, and the other beam direction may have a property limited to a specific channel/RS.

As a result, in the case of the above-described proposed method, it is possible to configure a beam/power optimized for a specific channel/RS compared to a method based on an unified TCI framework (i.e., an unified TCI indication scheme). Additionally, in the case of the above proposed method, compared to the existing UL M-TRP transmission method, it may be operated with a small overhead for beam indication.

Embodiment 4

When two or more UL TCI states are configured by an unified TCI indication scheme and two spatial relation info/RS and PC sets are configured for the existing UL M-TRP transmission scheme, a terminal may ignore/disregard the configuration of the two spatial relation info/RS and PC sets, and preferentially apply the unified TCI indication scheme.

Alternatively, the terminal may not expect the base station to configure as described above. For example, in the case of PUCCH, if the PUCCH-related UL TCI state is indicated through the unified TCI indication scheme, the terminal may not expect spatial relation info/RS and/or PC set to be configured for the PUCCH resource. Alternatively, in the case of PUSCH, if the PUSCH-related UL TCI state is indicated through the unified TCI indication scheme, the terminal may not expect that spatial relation info/RS and/or PC set, etc. are configured for the PUSCH-related SRS. Here, the PUSCH-related SRS may be an SRS configured for a codebook based (CB) PUSCH, an SRS configured for a non-codebook based (NCB) PUSCH, and the like.

In the present disclosure, for clarity of explanation, although two STxMP panels, two UL TCI states, and two spatial relation info/RS and PC sets configured for transmission of UL M-TRP are assumed and described as a representative examples, the proposal of the present disclosure may be applied by extending it to N1, N2, and N3, respectively.

Additionally, although the proposal of the present disclosure has been described assuming that the same UL TB is transmitted in two STxMP panels for the same TO, it may be extended and applied even when different TBs are repeatedly transmitted.

According to the above-described proposal of the present disclosure, a terminal may perform UL transmission through various beams by using both the UL beam indicated through the unified TCI indication scheme and the UL beam configured/indicated using spatial relation info. In this case, multiple UL beams simultaneously transmitted (e.g., STxMP-based transmission) in one TO may be configured/indicated by the base station to the terminal or determined based on predefined rules.

General Device to which the Present Disclosure may be applied

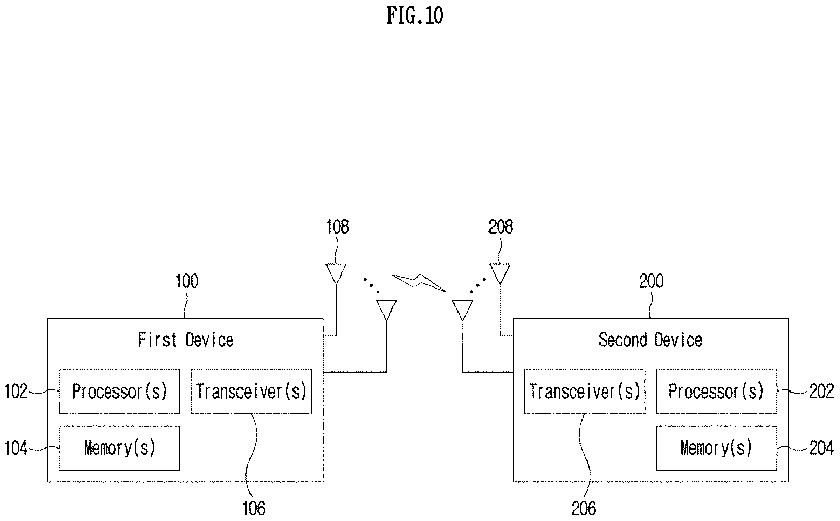

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a terminal in a wireless communication system, the method comprising:

   receiving information related to a first number of reference signals, RSs, for uplink transmission from a network; and
   performing the uplink transmission based on the second number of RSs among the first number of RSs,
   wherein the second number is smaller than the first number,
   wherein the second number of RSs are paired based on one or more of a type, an indication order, or an index related to a RS.

2. The method of claim 1,
   wherein the type includes a first type for a RS related to an uplink transmission configuration indicator, TCI, state and a second type for a RS related to spatial relation info.

3. The method of claim 2,
   wherein the second number of RSs are paired by prioritizing the first type over the second type.

4. The method of claim 1,
   wherein the first number of RSs includes a plurality of RSs corresponding to the same type.

5. The method of claim 4,
   wherein the second number of RSs are paired according to an order in which the plurality of RSs corresponding to the same type are indicated.

6. The method of claim 4,
   wherein the second number of RSs are sequentially paired based on a RS corresponding to the lowest index among the plurality of RSs corresponding to the same type.

7. The method of claim 1,
   wherein the second number of RSs are simultaneously applied for the uplink transmission in one time unit.

8. The method of claim 7,

   wherein capability information related to simultaneous application of the second number of RSs is reported from the terminal to the network, and
   wherein the terminal is in a status in which the simultaneous application of the second number of RSs is enabled by the network.

9. The method of claim 1,
   Wherein, based on a plurality of time units for the uplink transmission being allocated to the terminal, the uplink transmission is performed according to an indication of a mapping relation between the second number of RSs and time units, over the plurality of time units.

10. The method of claim 9,
    wherein the mapping relation corresponds to cyclic mapping or sequential mapping.

11. The method of claim 1,

    wherein capability information related to the number of RS candidate sets supportable by the terminal is reported from the terminal to the network, and
    wherein the second number is based on the number of RS candidate sets.

12. A terminal in a wireless communication system, the terminal comprising:

   at least one transceiver; and
   at least one processor coupled with the at least one transceiver,
   wherein the at least one processor is configured to:

   receive information related to a first number of reference signals, RSs, for uplink transmission from a network; and
   perform the uplink transmission based on the second number of RSs among the first number of RSs,
   wherein the second number is smaller than the first number,
   wherein the second number of RSs are paired based on one or more of a type, an indication order, or an index related to a RS.

13. A base station in a wireless communication system, the base station comprising:

   at least one transceiver; and
   at least one processor coupled with the at least one transceiver,
   wherein the at least one processor is configured to:

   transmit information related to a first number of reference signals, RSs, for uplink reception to a terminal; and
   perform the uplink reception based on the second number of RSs among the first number of RSs,
   wherein the second number is smaller than the first number,
   wherein the second number of RSs are paired based on one or more of a type, an indication order, or an index related to a RS.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

# FIG.6

INITIAL CELL SEARCH

SYSTEM INFORMATION RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601　　S602　　S603　S604　　S605　　S606　　S607　　S608

· DL/UL ACK/NACK
· UE CQI/PMI RI REPORT
  USING PUSCH AND PUCCH

FIG.7

EP 4 270 844 A1

Layer group #1
for CW #1

Layer group #2
for CW #1

UE1

(a)

Layer group #1
for CW #1

Layer group #2
for CW #2

UE1

(b)

FIG.8

START

Receive information related to
the first number of RSs for UL transmission — S810

Perform UL transmission
based on the second number of RSs
among the first number of RSs — S820

END

## FIG.9

START

Transmit information related to
the first number of RSs for UL reception ～ S910

Perform UL reception
based on the second number of RSs
among the first number of RSs ～ S920

END

FIG.10

Europäisches
Patentamt

European
Patent Office

Office européen
des brevets

## EUROPEAN SEARCH REPORT

Application Number

EP 23 16 7449

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 297 579 B2 (QUALCOMM INC [US]) 5 April 2022 (2022-04-05) * column 2, line 7 - line 35 * * column 10, line 35 - column 12, line 5 * ----- | 1-13 | INV. H04L5/00 |
| X | NOKIA ET AL: "Enhancements for Multi-TRP URLLC schemes", 3GPP DRAFT; R1-2101006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e Meeting; 20210125 - 20210205 18 January 2021 (2021-01-18), XP051970594, Retrieved from the Internet: URL:https://ftp.3gpp.org/tsg_ran/WG1_RL1/T SGR1_104-e/Docs/R1-2101006.zip R1-2101006_M-TRP_URLLC.docx [retrieved on 2021-01-18] | 1,7,8, 11-13 | |
| A | * page 14, paragraph 2.3.4 * ----- | 2-6,9,10 | TECHNICAL FIELDS SEARCHED (IPC) H04L |
| A | WO 2018/176401 A1 (NEC CORP [JP]; GAO YUKAI [CN]) 4 October 2018 (2018-10-04) * paragraph [0046] - paragraph [0056] * ----- -/-- | 1-13 | |

The present search report has been drawn up for all claims

| Place of search | Date of completion of the search | Examiner |
|---|---|---|
| The Hague | 18 September 2023 | Amadei, Davide |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

# EUROPEAN SEARCH REPORT

Europäisches Patentamt
European Patent Office
Office européen des brevets

**Application Number**

EP 23 16 7449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "On Multiplexing of Different RS Types", 3GPP DRAFT; R1-1718514, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic ;20171009 – 20171013 8 October 2017 (2017-10-08), XP051341696, Retrieved from the Internet: URL:http://www.3gpp.org/ftp/Meetings_3GPP_SYNC/RAN1/Docs/ [retrieved on 2017-10-08] | 1,12,13 | |
| A | * page 2, paragraph 4 * * page 4, paragraph 5 * * figures 1-4 * | 2-11 | |

----

**TECHNICAL FIELDS SEARCHED (IPC)**

The present search report has been drawn up for all claims

| Place of search | Date of completion of the search | Examiner |
|---|---|---|
| The Hague | 18 September 2023 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7449

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| US 11297579 | B2 | 05-04-2022 | US | 2020236641 A1 | 23-07-2020 |
| | | | WO | 2020154276 A1 | 30-07-2020 |
| WO 2018176401 | A1 | 04-10-2018 | JP | 2020512764 A | 23-04-2020 |
| | | | JP | 2023027171 A | 01-03-2023 |
| | | | US | 2020235899 A1 | 23-07-2020 |
| | | | US | 2022123914 A1 | 21-04-2022 |
| | | | WO | 2018176401 A1 | 04-10-2018 |

EPO FORM P0459

For more details about this annex : see Official Journal of the European Patent Office, No. 12/82